# EUROPEAN PATENT APPLICATION

(11) **EP 4 772 853 A1**
(43) Date of publication of application: **08.07.2026**
(21) Application number: 24867810.4
(22) Date of filing: 23.04.2024
(51) Int. Cl.: G01N 3/08, G01N 3/20, G01N 17/00

(54) **METHOD FOR EVALUATING DELAYED FRACTURE, METHOD FOR PREDICTING DELAYED FRACTURE, METHOD FOR MANUFACTURING PRESS-MOLDED ARTICLE, AND PROGRAM**

(30) Priority: 21.09.2023 JP 2023155594
(71) Applicant: JFE Steel Corporation, Tokyo, 100-0011 (JP)
(72) Inventor: MATSUKI Yuichi, Tokyo 100-0011 (JP); SHINMIYA Toyohisa, Tokyo 100-0011 (JP); NAKAGAWA Kinya, Tokyo 100-0011 (JP)
(74) Representative: Haseltine Lake Kempner LLP
(86) International application number: PCT/JP2024/015938
(87) International publication number: WO 2025/062721

(57) **Abstract**

There are provided a method capable of evaluating delayed fracture in a sheared end surface with higher accuracy and a method for manufacturing a press-formed article using the method. A method for evaluating delayed fracture for evaluating the delayed fracture characteristics of a sheared end surface of a metal sheet including: testing whether the delayed fracture occurs with respect to application of forming strain and load stress to the sheared end surface of the metal sheet; for each of two or more evaluation positions along the sheet thickness direction of the sheared end surface, determining evaluation information on whether the delayed fracture occurs with respect to the forming strain and the load stress at the evaluation position based on the test; and determining, from the determined evaluation information, evaluation criteria for the delayed fracture evaluation with the evaluation position, the forming strain, and the load stress as variables.

## Description

### Technical Field

The present invention is a technology related to a delayed fracture evaluation and a delayed fracture prediction in a sheared end surface of a metal sheet. The present invention is also a technology related to the manufacture of a press-formed article using the technology.

### Background Art

At present, automobiles have been required to improve fuel consumption by a reduction in weight and collision safety. For the purpose of achieving both the reduction in weight of a vehicle body and the protection of passengers in the event of a collision, high-strength steel sheets tend to be used. Particularly in recent years, high-strength steel sheets having a tensile strength of 980 MPa or more have begun to be applied to the vehicle body. One of the problems when the high-strength steel sheet is applied to the vehicle body is a delayed fracture. Particularly in steel sheets having a tensile strength of 980 MPa or more, the delayed fracture occurring from an end surface after shearing working is a significant problem. The end surface after shearing working is also referred to as a sheared end surface.

The sheared end surface is known to have a large residual tensile stress by shearing working. There is concern that this residual stress causes the occurrence of the delayed fracture in the sheared end surface described above. The delayed fracture in the sheared end surface is known to be further promoted by loading external stress to the sheared end surface. To address the problem, test methods have been conventionally proposed that include loading stress by constant displacement constraint due to bending deformation as described in PTL 1 and PTL 2, for example. It has also been proposed to perform evaluation by a test of loading stress by constant load loading due to uniaxial deformation as described in PTL 3, for example.

### Citation List

### Patent Literatures

PTL 1: JP 6380423 B
PTL 2: JP 5971058 B
PTL 3: JP 6354476 B
PTL 4: JP 2022-014784 A

### Summary of Invention

### Technical Problem

The higher the tensile strength, the more concern there is about the delayed fracture occurring from the sheared end surface of the high-strength steel sheet. Therefore, it has been desirable to be able to evaluate the delayed fracture occurring from the sheared end surface with higher accuracy.

However, the above-described conventional methods have not been able to perform a delayed fracture evaluation considering a forming strain-load stress state inside the sheet thickness of the sheared end surface.

The present invention has been made focusing on the above-described points. It is one object of the present invention to provide a method capable of evaluating the delayed fracture in the sheared end surface with higher accuracy and a method for manufacturing a press-formed article using the method.

### Solution to Problem

The present inventors have conducted extensive studies, and as a result have obtained the following findings. A case is considered where external load stresses to be loaded to the sheared end surface have the same magnitude and methods for loading stress load are different. In this case, the present inventors have obtained a finding that, even when the load stresses have the same magnitude, a limit stress is different depending on places in the sheet thickness of the sheared end surface depending on the method for loading stress load. The limit stress is a stress at the limit at which the delayed fracture does not occur in the sheared end surface. For example, tightening tests and actual formed articles after external load is loaded by uniaxial deformation, bending deformation, and V-bending deformation under the same external load condition are compared. From this comparison, the present inventors have obtained a finding that the limit stress is different depending on places in the sheet thickness of the sheared end surface depending on the method for loading stress load.

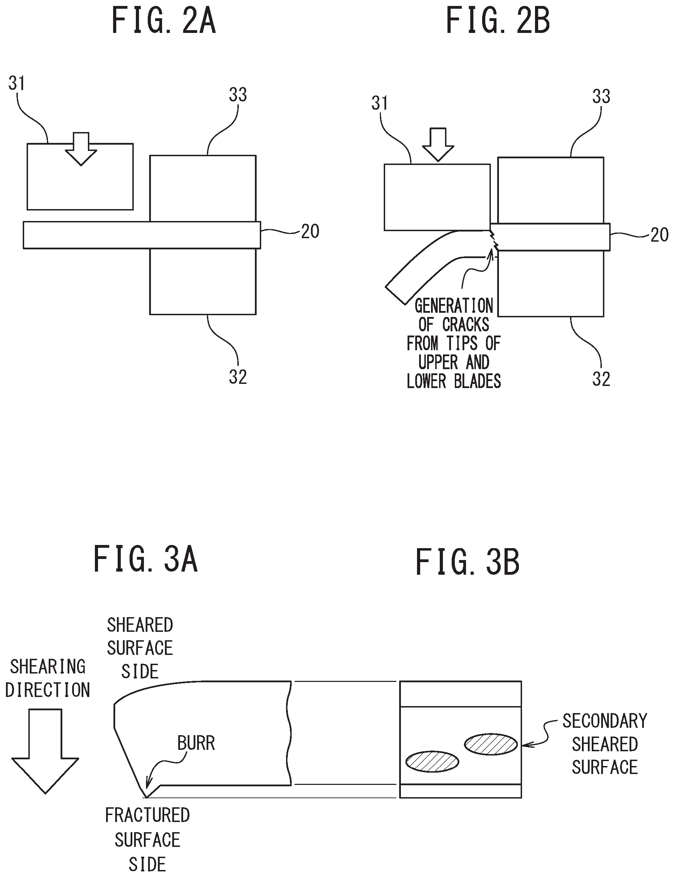

The following is the cause of the reason for the difference. More specifically, the sheared end surface has nonuniformity, such as a burr and a secondary sheared surface, or a residual stress distribution by shearing from the sheared surface side to the fractured surface side (see FIG. 3). This is the cause.

Herein, it is a known finding that the limit stress of the delayed fracture changes by influence of the forming strain generated by press forming as described in PTL 4. However, there is a possibility that a change in delayed fracture characteristics by the forming strain also has different influence depending on places in the sheet thickness.

Therefore, it is preferable to consider the stress-strain in each place in the sheet thickness direction to evaluate or predict the delayed fracture in the sheared end surface in actual automobile components. It is preferable to then estimate whether the delayed fracture occurs based on the consideration. In this point, it has been conventionally aimed to provide an effective delayed fracture evaluation method and an effective program.

Aspects of the present invention have been devised to solve the above-described problems. The delayed fracture limit is set considering distributions of the forming strain and the load stress in the sheet thickness direction of the sheared end surface in a delayed fracture test. Thus, it has been considered to provide effective delayed fracture evaluation method and prediction method considering the forming strain-load stress in the sheet thickness of the sheared end surface.

To solve the problems, one aspect of the present invention is a method for evaluating delayed fracture for evaluating the delayed fracture characteristics of a sheared end surface of a metal sheet, the method including: testing whether the delayed fracture occurs with respect to application of forming strain and load stress to the sheared end surface of the metal sheet; for each of two or more evaluation positions along the sheet thickness direction of the sheared end surface, determining evaluation information on whether the delayed fracture occurs with respect to the forming strain and the load stress at the evaluation position based on the test; and determining, from the determined evaluation information, evaluation criteria for the delayed fracture evaluation with the evaluation position, the forming strain, and the load stress as variables.

### Advantageous Effects of Invention

According to the aspect of the present invention, the occurrence of the delayed fracture is discriminated and predicted considering the forming strain and the load stress for each position in the sheet thickness direction. This allows effective evaluation and prediction of the delayed fracture.

Thus, according to the aspect of the present invention, the delayed fracture characteristics can be improved when the high-strength steel sheet is applied to various components, such as panel components and structural and skeletal components, of automobiles, for example.

### Brief Description of Drawings

FIG. 1 is a configuration diagram illustrating one example of evaluation processing of delayed fracture according to an embodiment based on the present invention;
FIGS. 2A and 2B are schematic views of shearing working, in which FIG. 2A is a view illustrating a state before the start of shearing and FIG. 2B is a view illustrating a state during shearing;
FIGS. 3A and 3B are schematic views of a sheared end surface, in which FIG. 3A is a side view and FIG. 3B is a plan view;
FIGS. 4A to 4C are schematic views of a residual stress distribution in the extension direction of the sheared end surface, in which FIG. 4A is a side view, FIG. 4B is a plan view, and FIG. 4B is a view illustrating the residual stress along the shearing direction;
FIG. 5 is a diagram illustrating a procedure example of the prediction of delayed fracture and the manufacture of a press-formed article;
FIG. 6 is a diagram illustrating a configuration example of a program for predicting delayed fracture;
FIG. 7 is a view illustrating an example of a first limit curve in a safe region; and
FIG. 8 is a perspective view illustrating a metal component (press-formed article) in Examples.

### Description of Embodiments

Next, embodiments based on the present invention are described with reference to the drawings.

### (Delayed fracture evaluation method)

This embodiment is an evaluation method for a metal sheet for press forming to be used for press processing. Specifically, this embodiment is a delayed fracture characteristic evaluation method for evaluating the delayed fracture characteristics of a sheared end surface of the metal sheet. This embodiment further exhibits the effects particularly when the metal sheet is a high-strength steel sheet.

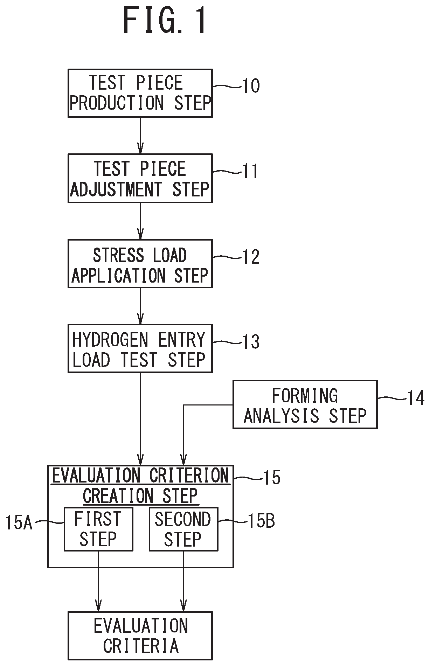

This embodiment includes test steps of performing an actual test and evaluation steps as processing of the delayed fracture characteristic evaluation for a metal sheet to be evaluated. Specifically, the delayed fracture characteristic evaluation method of this embodiment includes a test piece production step 10, a test piece adjustment step 11, a stress load application step 12, a hydrogen entry load test step 13, a forming analysis step 14, and an evaluation criterion creation step 15 as illustrated in FIG. 1. The test piece production step 10, the test piece adjustment step 11, the stress load application step 12, and the hydrogen entry load test step 13 correspond to the test steps. The forming analysis step 14 and the evaluation criterion creation step 15 correspond to evaluation processing steps.

### <Test piece production step 10>

The test piece production step 10 is a step of producing a test piece having a sheared end surface by applying shearing working under a set shearing condition to a metal sheet to be evaluated.

The shearing condition is a working condition in the shearing working. The shearing condition is a value of the clearance between an upper blade and a lower blade, for example.

FIGS. 2A and 2B are schematic views of the shearing working. In the shearing working, a metal sheet 20 is held between a lower blade 32 and a sheet holder 33 on the unpunched side as illustrated in FIGS. 2A and 2B. This constrains the metal sheet 20. In the constraint state, an upper blade 31 is moved vertically relative to the sheet 20. This gives shear deformation to the metal sheet 20. When the metal sheet 20 is sufficiently deformed by the shear deformation, cracks are generated from the position where the tip of the upper blade 31 and the tip of the lower blade 32 contact each other in the metal sheet 20. Then, the cracks meet to separate the metal sheet 20, so that the shearing working is completed. The movement direction of the upper blade 31 is the shearing direction.

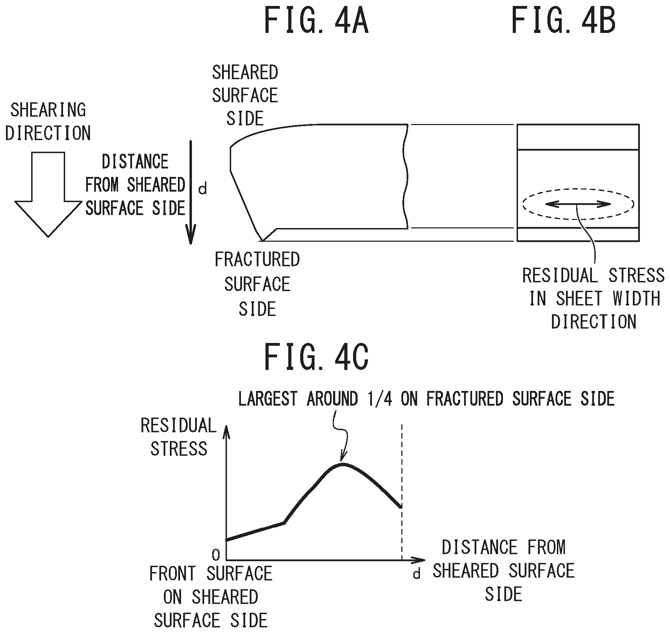

FIGS. 3A and 3B are schematic views of the shapes on the unpunched side of the sheared end surface. FIGS. 4A to 4C illustrate a residual stress distribution in the extension direction in a typical sheared end surface in the sheet thickness direction. Herein, the region indicated by the sheared end surface is a region within 1 mm deep from the front surface of the end surface produced by the shearing. The region is a region where strain and a residual stress by the shearing are present.

In the sheared end surface, there are two regions of a region on the sheared surface side and a region on the fractured surface side in the sheet thickness direction on the unpunched side. The sheared surface side is the side that is rubbed by the upper blade 31 to become a smooth end surface. The fractured surface side is the side that becomes a relatively rough end surface separated by the crack propagation from the tip of the upper blade 31 and the tip of the lower blade 32.

In usual, the fractured surface side where the crack has propagated has a residual stress higher than that of the sheared surface side. As illustrated in FIGS. 4A to 4C, there is a point where the cracks from the tip of the upper blade 31 and the tip of the lower blade 32 meet at an approximately 1/4 position of the fractured surface side of the sheet thickness from the fractured surface side (lower blade 32 side). This point is a point where a material is finally separated. Therefore, this point is subjected to the strongest plastic deformation, and therefore the highest tensile stress remains at this point (see FIGS. 4A to 4C).

As described above, a plurality of test pieces having the same sheared surface sheared under the same shearing working condition is produced in a sheared end surface formation step.

There is a possibility that the residual stress of the end surface by the shearing described above is relaxed by the subsequent plastic working to the end surface. On the other hand, there is also possibility that, when the plastic working is very difficult to perform, damage on the end surface conversely promotes the delayed fracture. A possibility is also high that the shearing condition or a shear-type worn state changes, and the change has influence. A possibility is also high that a change in general sheared end surface properties, such as a burr, a secondary sheared surface, and a shear drop, for example, has influence.

From the above, considering the following three points is important for the evaluation and the prediction of the delayed fracture. The three points include the position in the sheared end surface, plastic working strain (forming strain) to the end surface, and load stress to the end surface.

### <Test piece adjustment step 11>

The test piece adjustment step 11 is a working step of adjusting forming strain possessed by the sheared end surface of each created test piece. However, the forming strain adjustment processing is not carried out for some test pieces.

The test piece adjustment step 11 of this embodiment carries out processing of introducing forming strain by one or two or more strain introduction methods into the sheared end surface of the plurality test pieces to be adjusted. Each strain introduction method is a strain introduction method selected from among two or more types of strain introduction methods (working methods) different in distribution of strain stress generated in the sheet thickness direction.

The following description gives a description of a case where forming strain is introduced by one strain introduction method. Forming strain may be introduced by sequentially carrying out two or more strain introduction methods.

Examples of the working methods (method for applying plastic strain) as the two or more types of strain introduction methods (method for applying plastic strain) include bending working in the sheet thickness direction, such as minor axis tension, minor axis compression, and V-bending working, and the like. Introduction places are the sheared end surfaces and the vicinities thereof. Examples of the bending working include two types of bending working of bending working in which the outside of the bending is the sheared surface side and bending working in which the outside of the bending is the fractured surface side. Distributions of the forming strain and the residual stress along the sheet thickness direction of the sheared end surface are different depending on the bending direction.

As described above, the residual stress distribution in the sheet thickness direction of the sheared end surface after the shearing is not symmetrical with respect to the center in the sheet thickness direction.

In this embodiment, the test pieces after the test piece adjustment step 11 are classified into groups of the test pieces in which the sheared end surface has been subjected to the following strain adjustment.
1. Group of test pieces that are in the sheared state without being subjected to working;
2. Group of test pieces each having the sheared end surface into which tensile strain has been introduced by minor axis tension;
3. Group of test pieces each having the sheared end surface into which compressive strain has been introduced by minor axis compression;
4. Group of test pieces each having the sheared end surface into which bending strain has been introduced by V-bending (bending with a burr side as the outside of the bending) working; and
5. Group of test pieces each having the sheared end surface into which bending strain has been introduced by V-bending (bending with a burr side as the inside of the bending) working.

In the case of the strain adjustments of 2, 3 above, no working strain has been introduced into the sheared end surface in the adjusted test pieces or the same strain has been introduced into all positions in the sheet thickness.

In the case of the strain adjustments of 4, 5 above, these test pieces have a distribution of working strain with respect to the position in the sheet thickness. Residual stress by the working also has a distribution in the sheet thickness.

In the case of the adjustments of 2 to 5, a plurality of test pieces of each group is created by changing the forming strain to be applied by changing the degree of the working.

In the test piece adjustment step 11 in this embodiment, it is carried out by performing the working up to a plastic region.

### <Stress load application step 12>

Next, in the stress load application step 12, stress is loaded to the sheared end surface of each test piece by one stress loading method selected from two or more types of stress loading methods different in stress load distribution in the sheet thickness direction. Then, constraining processing is performed in that state.

Examples of the two or more types of stress loading methods include, for example, methods, such as four-point bending working (see PTL 1), tightening in V-bending (see PTL 2), and uniaxial tension. When four-point bending working or V-bending is used, it is more preferable to prepare samples as follows. More specifically, it is more preferable to prepare samples such that parts to which tensile stress by bending is loaded are two types of parts of the sheared surface side and the fractured surface side depending on the bending direction. The sheared surface side and the fractured surface side are determined by the orientation of the shearing working.

In the stress loading by uniaxial tension, the same stress is loaded along the sheet thickness direction to the sheared end surface. In the stress loading by the four-point bending, stress from tension to compression by pure bending is loaded from the outside of the bending to the inside of the bending along the sheet thickness direction. This causes the generation of a gradient in the load stress along the sheet thickness direction.

Further, a plurality of test pieces different in stress load state is prepared by changing the degree of the stress to be loaded for each stress loading method.

Herein, bending deformation and uniaxial tensile deformation may be given by any conventionally known method. The stress adjustment may be implemented by confirming the value of the load stress by strain gauges attached to the test pieces in advance, for example. A plurality of test pieces different in load stress may be prepared by changing a load stress change sufficiently small spans, such as 100 MPa increments, for example.

### <Hydrogen entry load test step 13>

In the hydrogen entry load test step 13, each constrained test piece is placed in a preset hydrogen entry environment for a preset time. Each constrained test piece is the test piece that has been subjected to loading of load stress in the stress load application step 12 and constrained in that state. Then, in the hydrogen entry load test step 13, the generation situation of cracks is evaluated in the test pieces in that state.

For samples where the delayed fracture occurs, the sheared end surfaces are actually observed by interval photographing, moving image photographing, or the like by a camera, if possible. In this case, the position where delayed fracture cracks are generated can be specified. More specifically, the position in the sheet thickness where the delayed fracture has occurred can be actually confirmed.

The hydrogen entry environment and the placement time are preferably set to conditions where the hydrogen entry amount equivalent to the amount of hydrogen estimated to enter in an environment, in which a material to be evaluated is actually used, is obtained.

The placement of the test piece in the hydrogen entry environment is performed by immersing the test piece in a bath containing an acid solution, such as hydrochloric acid or an aqueous NH₄SCN solution. The acid solution concentration and the immersion time are set such that hydrogen in a preset amount as the allowable upper limit enters the test piece. Then, the largest load stress among load stresses at which cracks equal to or larger than a predetermined level are not generated is defined as a limit stress according to the stress distribution in the sheet thickness direction corresponding to the heavy load condition.

Then, the test above is repeated by changing the load loading conditions and the like as appropriate in accordance with the situation of the occurrence of the delayed fracture in the hydrogen entry load test step 13.

The steps up to the steps above are the test steps.

### <Forming analysis step 14>

In the forming analysis step 14, plastic strain and load stress by forming are calculated by implementing forming analysis by known CAE. The plastic strain is plastic strain generated by the working to the sheared end surfaces of the test pieces implemented in the test piece adjustment step 11 and the stress load application step 12. The forming analysis by CAE is carried out by a finite element method, for example.

Herein, the load stress by the forming described above is the final stress generated by the residual stress by the working in the test piece adjustment step 11 and the stress loading from the outside in the stress load application step 12.

For the calculation by CAE, solid elements may be used, but shell elements that have a small number of elements and are simpler may also be used.

Next, in the forming analysis step 14, the strain amount and the stress by the working are determined and stored for each position in the sheet thickness direction (evaluation position) for the elements corresponding to the sheared end surfaces of the calculated test pieces.

At this time, when the shell elements are used for the analysis, the strain amount and the stress by the working are calculated for each integration point in the sheet thickness direction. This correlates the strain amount and the stress by the working with the position in the sheet thickness. The number of the integration points in the sheet thickness direction are individually set to two or more. The integration point positions are set to the evaluation positions along the sheet thickness direction. When the evaluation positions are set to two places, for example, the two places include a position on the front surface of the sheet and a position on the rear surface of the sheet.

### <Evaluation criterion creation step 15>

For each of the two or more evaluation positions in the sheet thickness direction of the sheared end surface, the forming strain and the load stress at each of the two or more evaluation positions are determined by the test steps and the forming analysis step 14 described above. Further, it has been determined whether the delayed fracture occurs. The evaluation position may be expressed by the distance from the front surface on the sheared side (coordinates), for example.

More specifically, for each group of three variables (evaluation position, forming strain, load stress), a plurality of evaluation data in which it has been evaluated whether the delayed fracture occurs is acquired. The acquired data are stored in a storage portion 60.

In the evaluation criterion creation step 15, processing of determining the evaluation criteria for the delayed fracture evaluation from the above-described plurality of evaluation data is carried out.

The evaluation criterion creation step 15 of this embodiment includes a first step 15A and a second step 15B as illustrated in FIG. 1.

### [First step 15A]

In the first step 15A, processing of determining a safe region as the evaluation criterion is carried out.

In the first step 15A, the above-described evaluation data for the sheared end surfaces of all test pieces where the delayed fracture has not occurred are used. The evaluation data are developed into a three-dimensional space using three of the evaluation position (position in the sheet thickness), the strain amount by the working, and the load stress as variables. Since the delayed fracture does not occur, all the evaluation data in the sheet thickness direction are used. The range on a low stress side relative to the boundary (first limit curve) on a high stress side of a region containing these evaluation data groups is set as a safe region where the delayed fracture does not occur.

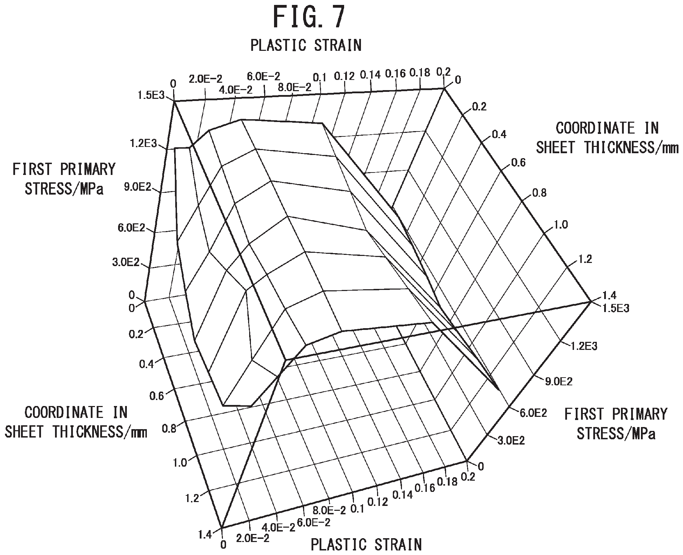

In the first step 15A of this embodiment, a surface defining the upper limit of the safe region with the coordinates, the forming strain, and the load stress in the sheet thickness direction of the sheared end surface as variables is determined as the first limit curve (e.g., curve illustrated in FIG. 7) as the evaluation criterion. The use of the first limit curve allows simple determination whether it is within the safe region.

### [Second step 15B]

In the second step 15B, processing of determining a concern region having a possibility that the delayed fracture occurs as the evaluation criterion.

In the second step 15B, the evaluation data of all test pieces in which the delayed fracture has occurred are used. The evaluation data are developed into a three-dimensional space using the three of the evaluation position (position in the sheet thickness), the strain amount by the working, and the load stress as variables. Then, a region is acquired which contains an information data group obtained by removing information data of the safe region from the information data. Then, the range on a high stress side relative to the boundary on a low stress side in the acquired region is set as a concern region having a possibility that the delayed fracture occurs.

In the second step 15B of this embodiment, as the evaluation criterion, the limit curve defining the undersurface of the above-described concern region is a curve synonymous with the first limit curve. More specifically, the first limit curve is the boundary surface separating the safe region and the concern region. The above-described concern region is a region where the coordinates, the forming strain, and the load stress in the sheet thickness direction of the sheared end surface as variables.

In the second step 15B, information in which the delayed fracture occurrence position in the sheet thickness direction is specified by a camera, moving images, or visual observation. By the information, only evaluation data are acquired in which the actual delayed fracture occurrence position where the delayed fracture has occurred is clear. Then, the evaluation data are developed into a three-dimensional space with the three of the evaluation position (position in the sheet thickness) of the acquired evaluation data, the strain amount by the working, and the load stress as variables. Then, the range on a high stress side relative to the boundary on a low stress side (second limit curve) in a region containing the information data are set as a danger region having a possibility that the delayed fracture occurs.

In the second step 15B of this embodiment, a surface defining the boundary on the low stress side of the danger region with the coordinates, the forming strain, and the load stress in the sheet thickness direction of the sheared end surface as variables is determined as the second limit curve as the evaluation criterion.

In the processing described above, the three of the evaluation position (position in the sheet thickness), the strain amount by the working, and the load stress are used as variables. It becomes possible to obtain data of the evaluation criteria as the evaluation determination criteria for the delayed fracture characteristic evaluation of the sheared end surface using the three variables.

### (Delayed fracture prediction method)

In the above-described evaluation method, the safe region, the concern region, and the danger region of the delayed fracture of the sheared end surface are used in which the three points of the position in the sheet thickness direction in the sheared end surface, plastic working strain to the end surface, and the load stress to the end surface are considered. Then, a risk of the delayed fracture occurrence from the sheared end surface in an actual press-formed article is determined by the following procedure. Then, a press-formed article in which the risk of the delayed fracture is reduced is manufactured referring to the determination. The danger region is a part of the concern region.

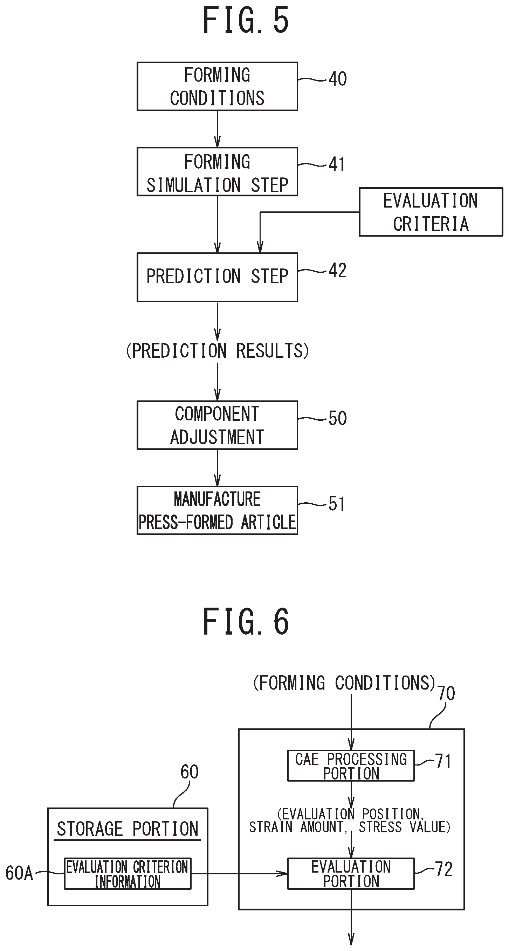

The delayed fracture prediction method includes a forming simulation step 41 and a prediction step 42 as illustrated in FIG. 5.

This embodiment describes a case where a metal sheet is press-worked to manufacture a press-formed article (metal component) as an example.

### <Forming simulation step 41>

In the forming simulation step 41, forming simulation of press-forming a metal sheet into a press-formed article is implemented based on forming analysis by known CAE. Then, for elements of a part corresponding to the sheared end surface in the press-formed article, the position in the sheet thickness, the strain amount by the working, and the stress by the working are determined and stored.

When shell elements are used for the forming analysis by CAE, the strain amount by the working and the stress by the working are calculated for each integration point in the sheet thickness direction, for example. This correlates the position in the sheet thickness with the strain amount by the working and the stress by the working with each other.

### <Prediction step 42>

It is determined that information of the evaluation target position containing the determined position in the sheet thickness, the determined strain amount by the working, and the determined stress by the working belongs to either the safe region or the concern region (containing the danger region). This determination is performed with reference to the above-described evaluation criteria.

Then, a case where it is determined that the information of the evaluation target position belongs to the safe region is determined as follows. More specifically, an end surface area of the element having an area belonging to the information of the evaluation target position is determined to have a low risk of the delayed fracture.

When the information of the evaluation target position belongs to the concern region, the end surface area of the element having an area belonging to the information of the evaluation target position is determined to have a high risk of the delayed fracture. Further, a case where the information of the evaluation target position belongs to the danger region is determined as follows. More specifically, the end surface area of the element having the area belonging to the information of the evaluation target position is determined to have a higher risk of the delayed fracture.

Herein, the information of the evaluation target position is contained in the concern region. However, the case where the information is contained in the danger region indicates that the delayed fracture sometimes does not occur depending on a working method.

The determination whether the information belongs to each region can be more simply performed when the first limit curve to the third limit curve described above are utilized.

### (Method for manufacturing press-formed article)

When a press-formed article of a target shape is manufactured from a metal sheet, an end surface area determined to have a high risk of the delayed fracture by the delayed fracture prediction method prior to the manufacturing is adjusted as follows. More specifically, the adjustment is performed by changing the material, changing the sheared end surface shape in the press-formed article, changing a pressing method, or the like. The evaluation information containing the position in the sheet thickness and the strain amount and the stress by the working is adjusted to move to the safe region (see component adjustment 50 in FIG. 5). This can reduce the risk of the delayed fracture in the press-formed article. Then, the manufacture of the press-formed article is carried out (see reference sign 51 in FIG. 5).

A case where a predetermined delayed fracture test is applied to the actually manufactured press-formed article, and the delayed fracture has not occurred can be determined as follows. More specifically, for all the sheared end surfaces, the position in the sheet thickness and the forming strain amount and the stress by the working are developed into a three dimensional space. Then, the range on the low stress side relative to the boundary containing the developed information can be determined as the safe region where the delayed fracture does not occur.

### (Program)

In this embodiment, information 60A of the evaluation criteria for the delayed fracture evaluation is stored in the storage portion 60, which can be referred to by a computer. In the evaluation criterion information 60A, the evaluation position, the forming strain, and the load stress determined based on the method for evaluating delayed fracture described above are set as variables. The evaluation criterion information 60A may be in a state of a function or a model expression or may be tabular form data. In this embodiment, it is supposed that data defining the first limit curve and the second limit curve are stored in advance in the storage portion 60 as the evaluation criterion information 60A.

A program 70 of this embodiment includes a CAE processing portion 71 and an evaluation portion 72 as processing portions to be executed by a computer as illustrated in FIG. 6.

The CAE processing portion 71 inputs forming conditions, such as material information of a metal sheet to be worked, target shape information of a press-formed article, and a forming method of press forming. Then, forming analysis processing is carried out by known forming simulation by CAE. This determines the evaluation data containing the strain amount and the load stress by the working for each evaluation position of a representative place set at the sheared surface position possessed by the metal sheet.

The evaluation portion 72 refers to the evaluation criterion information stored in the storage portion 60. Then, it is determined whether the evaluation data determined in the CAE processing portion 71 are at positions above or positions under the first limit curve and the second limit curve.

The evaluation portion 72 determines that, when the evaluation data determined by the CAE processing portion 71 are less than the first limit curve, the delayed fracture does not occur in the place.

The evaluation portion 72 determines that, when the evaluation data determined by the CAE processing portion 71 are at positions above (stress value goes beyond) the first limit curve, the place has a possibility that the delayed fracture occurs. The evaluation portion 72 determines that, when the evaluation data determined by the CAE processing portion 71 are at positions above (stress value goes beyond) the second limit curve, the place has a risk that the delayed fracture occurs.

### (Others)

The present invention can take the following configurations.
(1) A method for evaluating delayed fracture for evaluating the delayed fracture characteristics of a sheared end surface of a metal sheet, the method including:
   testing whether the delayed fracture occurs with respect to application of forming strain and load stress to the sheared end surface of the metal sheet;
   for each of two or more evaluation positions along the sheet thickness direction of the sheared end surface, determining evaluation information on whether the delayed fracture occurs with respect to the forming strain and the load stress at the evaluation position based on the test; and
   determining, from the determined evaluation information, evaluation criteria for the delayed fracture evaluation with the evaluation position, the forming strain, and the load stress as variables.
(2) In the test,
   a plurality of metal sheets in which a sheared end surface is formed is prepared,
   after plastic strain is introduced into the sheared end surface of the plurality of metal sheets by one or two or more strain introduction methods selected from among two or more types of strain introduction methods different in distribution of strain generated in the sheet thickness direction,
   stress is loaded by one stress loading method selected from among two or more types of stress loading methods different in distribution of stress generated in the sheet thickness direction,
   the test of determining whether the delayed fracture occurs is carried out to each metal sheet in a state where the stress has been loaded, and
   the total of plastic strain generated by the plastic strain introduction and plastic strain generated by the loading of the stress is set as the forming strain.
(3) The test is carried out by placing the metal sheet in a hydrogen intrusion environment in a state where the forming strain and the stress load have been applied to the sheared end surface, and
   the forming strain and the load stress in the sheared end surface at the evaluation position are determined by forming analysis using a computer.
(4) The forming analysis is performed by a finite element method using shell elements, and
   coordinates in the sheet thickness direction of the sheared end surface corresponding to the evaluation position are determined by the positions of the integration points in the sheet thickness direction of the shell elements.
(5) The evaluation information of the forming strain and the load stress at the evaluation position where the delayed fracture has not occurred is determined, and a safe region where the delayed fracture does not occur is determined as the evaluation criterion from the determined evaluation information.
(6) As the evaluation criterion, a first limit curve defining the upper limit of the safe region with the coordinates, the forming strain, and the load stress in the sheet thickness direction of the sheared end surface as variables is determined.
(7) The evaluation information of the forming strain and the load stress at the evaluation position where the delayed fracture has occurred is determined, and a danger region having a possibility that the delayed fracture occurs is determined as the evaluation criterion from the determined evaluation information.
(8) The evaluation position where the delayed fracture has occurred is specified by observing a place where the delayed fracture has occurred in the sheet thickness direction of the sheared end surface in the test.
(9) As the evaluation criterion, a second limit curve defining the lower limit of the danger region with the coordinates, the forming strain, and the load stress in the sheet thickness direction of the sheared end surface as variables is determined.
(10) A method for predicting delayed fracture for predicting delay occurrence in a sheared end surface in a metal component to be manufactured by press-working a metal sheet having the sheared end surface including:
   based on the evaluation criteria determined by the method for evaluating delayed fracture described in the present disclosure, predicting the occurrence of the delayed fracture.
(11) The forming strains and the load stresses at two or more evaluation positions along the sheet thickness direction of the sheared end surface of the metal component generated by the press processing into the metal component of the metal sheet are individually calculated by analyzing the press processing by forming analysis using a computer, and
   the delayed fracture is predicted from the calculation results and the evaluation criteria.
(12) The forming analysis is performed by a finite element method using shell elements, and
   the coordinates in the sheet thickness direction of the sheared end surface corresponding to the evaluation position are determined by the positions of the integration points in the sheet thickness direction of the shell elements.
(13) The evaluation information of the forming strain and the load stress at the evaluation position where the delayed fracture has not occurred in the test is determined as the evaluation criteria, and a safe region where the delayed fracture does not occur is set from the determined evaluation information in advance,
   the forming strains and the load stresses at two or more evaluation positions of the sheared end surface of the metal component are individually calculated by analyzing the press processing into the metal component of the metal sheet by forming analysis using a computer, and, when the calculation results go beyond the safe region, it is determined that there is a risk of the delayed fracture.
(14) The evaluation information of the forming strain and the load stress at the evaluation position where the delayed fracture has occurred in the test is determined as the evaluation criteria, and a danger region having a possibility that the delayed fracture occurs is set from the determined evaluation information in advance,
   the forming strains and the load stresses at two or more evaluation positions of the sheared end surface of the metal component are individually calculated by analyzing the working into the metal component of the metal sheet by forming analysis using a computer, and, when the calculation results are within the danger region, it is determined that there is a risk of the delayed fracture.
(15) The evaluation information of the forming strain and the load stress at the evaluation position where the delayed fracture has not occurred in the test is determined as the evaluation criteria, and a safe region where the delayed fracture does not occur is set from the determined evaluation information in advance, and the evaluation information of the forming strain and the load stress at the evaluation position where the delayed fracture has occurred in the test is determined, and a danger region having a possibility that the delayed fracture occurs is set from the determined evaluation information in advance,
   the forming strains and the load stresses at two or more evaluation positions of the sheared end surface of the metal component are individually calculated by analyzing the working into the metal component of the metal sheet by forming analysis using a computer, and, when the calculation results go beyond the safe region, it is determined that there is a risk of the delayed fracture, and further when the calculation results are within the danger region, it is determined that a risk of the delayed fracture is high.
(16) A method for manufacturing a press-formed article for manufacturing a press-formed article as a metal component by press-forming a metal sheet having a sheared end surface including:
   before the press-formed article is manufactured, predicting the occurrence of the delayed fracture by the method for predicting delayed fracture described in the present disclosure.
(17) A program causing a computer to execute processing of evaluating whether delayed fracture occurs referring to information of the evaluation criteria for the delayed fracture evaluation with the evaluation position, the forming strain, and the load stress determined based on the method for evaluating delayed fracture described in the present disclosure as variables for input evaluation position, forming strain, and load stress,
   the information of the evaluation criteria being stored in a storage portion.

### EXAMPLES

Examples based on this embodiment are described.

In this example, a case is described where a metal sheet, which is a 1470 MPa-strength grade steel having a sheet thickness of 1.4 mm, was set as an evaluation target of the delayed fracture. The present invention is not limited to such a metal sheet. The present invention is suitably applicable to metal sheets including ultrahigh tensile strength materials having a tensile strength of 980 MPa or more in which the delayed fracture occurs in the sheared end surface.

First, a metal sheet as the target is formed into a strip shape by shearing working. This produced a plurality of 150 mm long test pieces having a straight sheared end surface. The clearance in the shearing working was set to 10% with respect to the sheet thickness. In the sheared end surface, the unpunched side that was assumed to serve as the product side was left and the punched-out side was removed by cutting.

The position in the sheet thickness as used herein refers to the position along the sheet thickness direction in the sheared end surface.

### (Forming strain adjustment)

Next, the test pieces each having the sheared end surface were subjected to working of adjusting forming strain.

In this example, three types of test pieces of (1) test pieces that are in the sheared state without being subjected to the adjustment (working), (2) test pieces into which tensile strain was introduced by minor axis tension, and (3) test pieces into which compressive strain was introduced by minor axis compression were prepared. For each working, a plurality of test pieces different in strain amount was prepared. In these test pieces, no working strain was introduced into the sheared end surface or the same strain was introduced into all positions in the sheet thickness.

Further, two types of test pieces were additionally prepared into which bending strain was introduced by (4) V-bending (bent with the burr side as the outside of the bending) and (5) V-bending (bent with the burr side as the inside of the bending). The punch R of the bending working was set to 7 mm. These test pieces have a distribution of the working strain with respect to the position in the sheet thickness. The residual stress by the working also has a distribution in the sheet thickness.

### (Stress loading)

Next, the test pieces in (1), (2), (3) above were constrained in a state of being subjected to stress loading by four-point bending and uniaxial tension. In the stress loading by four-point bending, stress from tension to compression is loaded by pure bending from the outside of the bending to the inside of the bending. The stress loading by four-point bending was implemented such that parts to which tensile stress was loaded are two types of parts of the sheared surface side and the fractured surface side depending on the orientation of the shearing working. Then, the load stress was increased until test pieces where the delayed fracture occurred were obtained, and a plurality of test pieces was prepared. On the other hand, in the stress loading by uniaxial tension, tensile stress was uniformly loaded into the sheet thickness.

Also for the test pieces in (4), (5) above, stress was loaded from the center to the outside of a bent part by fixing the outside of a bent and deformed part with a bolt and tightening a V-shaped test piece. The load stress was increased until test pieces where the delayed fracture occurred were obtained, and a plurality of test pieces was prepared.

### (Hydrogen environment load test)

Each test piece created and adjusted as described above was placed in a hydrogen intrusion environment to investigate whether the delayed fracture occurred from the sheared end surface. The hydrogen entry was implemented by immersion in hydrochloric acid with pH adjusted to 3 for 96 h. The criteria for the occurrence of the delayed fracture are the generation and the penetration of the sheet thickness of cracks.

At this time, for the test pieces of the working strain and the stress load at the level at which the delayed fracture occurred, the initial generation position of delayed fracture cracks was confirmed and recorded by implementing interval photographing by a camera of the sheared end surface during the delayed fracture test.

### (Forming analysis)

The positions in the sheet thickness, the strain amounts by the working, and the stresses in areas in the vicinities of the sheared end surfaces of all the test pieces were calculated by forming analysis and recorded. Herein, simple shell elements are used in the CAE analysis, and the strain amount and the stress by the working are calculated for each integration point in the sheet thickness direction. This correlated the position in the sheet thickness with the strain amount and the stress by the working. Herein, the shell elements were set to a 1.4 mm rectangular shape which is the same as the sheet thickness. The vicinity of the sheared end surface indicates a region within about twice the sheet thickness from the sheared end surface. In this example, elements of end surface parts in the CAE analysis were used, and therefore the calculation was performed in a region within 1.4 mm from the end surface.

### (Evaluation results)

The following is a summary of the following data in the sheared end surfaces of the test pieces obtained by the above-described processing. The data include the occurrence or the non-occurrence of the delayed fracture, the occurrence position of the delayed fracture in the sheet thickness direction, and the position in the sheet thickness (integration point position), the working strain, and the load stress calculated by CAE.

The position in the sheet thickness of 0 mm indicates the front surface on the sheared surface side. The position in the sheet thickness of 1.4 mm indicates the front surface on the fractured surface side. The position in the sheet thickness between the points indicate the coordinates in the sheet thickness corresponding to each value. In this case, the calculation was performed at seven integration points in the sheet thickness direction within the shell elements, and therefore the analysis is the analysis in the sheet thickness range of 0.1 mm to 1.3 mm is performed.

Tables 1 to 3 show the results of the test pieces that were in the sheared state without being subjected to working in (1) above. Tables 1, 2 show cases where the stress loading was implemented by four-point bending. Table 3 shows a case where the stress loading was implemented by minor axis tension.

Tables 4 to 6 show the results of the test pieces into which strain was introduced by minor axis tension in (2) above. Tables 4, 5 show cases where the stress loading was implemented by four-point bending. Table 6 shows a case where the stress loading was implemented by minor axis tension.

Tables 7 to 9 show the results of the test pieces into which strain was introduced by minor axis compression in (3) above. Tables 7, 8 show cases where the stress loading was implemented by four-point bending. Table 9 shows a case where the stress loading was implemented by minor axis tension.

Tables 10 to 12 show the results of the test pieces into which strain was introduced by minor axis compression in (3) above. Tables 10, 11 show cases where the stress loading was implemented by four-point bending. Table 12 shows a case where the stress loading was implemented by minor axis tension.

Table 13 shows the results of the test pieces into which bending strain was introduced by V-bending (bent with the burr side as the outside) in (4) above. Table 14 shows the results of the test pieces into which bending strain was introduced by the V-bending (bent with the burr side as the inside) in (5) above.

To clearly show the safe region and the danger region of the delayed fracture, the tables are as follows. More specifically, in the test pieces where the delayed fracture did not occur under a certain working condition (OK) among the plurality of test pieces in which the load stress was changed, only the levels at which the load stress was the largest are shown.

**[Table 1]**

| Four-point bending (with sheared surface side as outside) | | | | |
|---|---|---|---|---|
| OK upper limit | | | | |
| | Position in sheet thickness/mm | Working equivalent plastic strain amount | Load stress | Delayed fracture occurrence position |
| Sheared surface side | 0.1 | 0 | 1300 | |
| | 0.3 | 0 | 867 | |
| | 0.5 | 0 | 433 | No delayed fracture |
| | 0.7 | 0 | 0 | |
| | 0.9 | 0 | -433 | |
| | 1.1 | 0 | -867 | |
| Burr side | 1.3 | 0 | -1300 | |

**[Table 2]**

| Four-point bending (with burr side as outside) | | | | |
|---|---|---|---|---|
| OK upper limit | | | | |
| | Position in sheet thickness/mm | Working equivalent plastic strain amount | Load stress | Delayed fracture occurrence position |
| Sheared surface side | 0.1 | 0 | -1000 | |
| | 0.3 | 0 | -667 | |
| | 0.5 | 0 | -333 | No delayed fracture |
| | 0.7 | 0 | 0 | |
| | 0.9 | 0 | 333 | |
| | 1.1 | 0 | 667 | |
| Burr side | 1.3 | 0 | 1000 | |

**[Table 3]**

| Uniaxial tension | | | | |
|---|---|---|---|---|
| OK upper limit | | | | |
| | Position in sheet thickness/mm | Working equivalent plastic strain amount | Load stress | Delayed fracture occurrence position |
| Sheared surface side | 0.1 | 0 | 600 | |
| | 0.3 | 0 | 600 | |
| | 0.5 | 0 | 600 | No delayed fracture |
| | 0.7 | 0 | 600 | |
| | 0.9 | 0 | 600 | |
| | 1.1 | 0 | 600 | |
| Burr side | 1.3 | 0 | 600 | |

**[Table 4]**

| | Position in sheet thickness/mm | Working equivalent plastic strain amount | Load stress | Delayed fracture occurrence position |
|---|---|---|---|---|
| Sheared surface side | 0.1 | 0.02 | 1400 | |
| | 0.3 | 0.02 | 933 | |
| | 0.5 | 0.02 | 467 | No delayed fracture |
| | 0.7 | 0.02 | 0 | |
| | 0.9 | 0.02 | -467 | |
| | 1.1 | 0.02 | -933 | |
| Burr side | 1.3 | 0.02 | -1400 | |

**[Table 5]**

| | Position in sheet thickness/mm | Working equivalent plastic strain amount | Load stress | Delayed fracture occurrence position |
|---|---|---|---|---|
| Sheared surface side | 0.1 | 0.02 | -1400 | |
| | 0.3 | 0.02 | -933 | |
| | 0.5 | 0.02 | -467 | No delayed fracture |
| | 0.7 | 0.02 | 0 | |
| | 0.9 | 0.02 | 467 | |
| | 1.1 | 0.02 | 933 | |
| Burr side | 1.3 | 0.02 | 1400 | |

**[Table 6]**

| | Position in sheet thickness/mm | Working equivalent plastic strain amount | Load stress | Delayed fracture occurrence position |
|---|---|---|---|---|
| Sheared surface side | 0.1 | 0.02 | 1300 | |
| | 0.3 | 0.02 | 1300 | |
| | 0.5 | 0.02 | 1300 | No delayed fracture |
| | 0.7 | 0.02 | 1300 | |
| | 0.9 | 0.02 | 1300 | |
| | 1.1 | 0.02 | 1300 | |
| Burr side | 1.3 | 0.02 | 1300 | |

**[Table 7]**

| | Position in sheet thickness/mm | Working equivalent plastic strain amount | Load stress | Delayed fracture occurrence position |
|---|---|---|---|---|
| Sheared surface side | 0.1 | 0.1 | 1400 | |
| | 0.3 | 0.1 | 933 | |
| | 0.5 | 0.1 | 467 | No delayed fracture |
| | 0.7 | 0.1 | 0 | |
| | 0.9 | 0.1 | -467 | |
| | 1.1 | 0.1 | -933 | |
| Burr side | 1.3 | 0.1 | -1400 | |

**[Table 8]**

| | Position in sheet thickness/mm | Working equivalent plastic strain amount | Load stress | Delayed fracture occurrence position |
|---|---|---|---|---|
| Sheared surface side | 0.1 | 0.1 | -1400 | |
| | 0.3 | 0.1 | -933 | |
| | 0.5 | 0.1 | -467 | No delayed fracture |
| | 0.7 | 0.1 | 0 | |
| | 0.9 | 0.1 | 467 | |
| | 1.1 | 0.1 | 933 | |
| Burr side | 1.3 | 0.1 | 1400 | |

**[Table 9]**

| | Position in sheet thickness/mm | Working equivalent plastic strain amount | Load stress | Delayed fracture occurrence position |
|---|---|---|---|---|
| Sheared surface side | 0.1 | 0.1 | 1300 | |
| | 0.3 | 0.1 | 1300 | |
| | 0.5 | 0.1 | 1300 | No delayed fracture |
| | 0.7 | 0.1 | 1300 | |
| | 0.9 | 0.1 | 1300 | |
| | 1.1 | 0.1 | 1300 | |
| Burr side | 1.3 | 0.1 | 1300 | |

**[Table 10]**

| | Position in sheet thickness/mm | Working equivalent plastic strain amount | Load stress | Delayed fracture occurrence position |
|---|---|---|---|---|
| Sheared surface side | 0.1 | 0.2 | 600 | |
| | 0.3 | 0.2 | 400 | |
| | 0.5 | 0.2 | 200 | No delayed fracture |
| | 0.7 | 0.2 | 0 | |
| | 0.9 | 0.2 | -200 | |
| | 1.1 | 0.2 | -400 | |
| Burr side | 1.3 | 0.2 | -600 | |

**[Table 11]**

| | Position in sheet thickness/mm | Working equivalent plastic strain amount | Load stress | Delayed fracture occurrence position |
|---|---|---|---|---|
| Sheared surface side | 0.1 | 0.2 | -600 | |
| | 0.3 | 0.2 | -400 | |
| | 0.5 | 0.2 | -200 | No delayed fracture |
| | 0.7 | 0.2 | 0 | |
| | 0.9 | 0.2 | 200 | |
| | 1.1 | 0.2 | 400 | |
| Burr side | 1.3 | 0.2 | 600 | |

**[Table 12]**

| | Position in sheet thickness/mm | Working equivalent plastic strain amount | Load stress | Delayed fracture occurrence position |
|---|---|---|---|---|
| Sheared surface side | 0.1 | 0.2 | 500 | |
| | 0.3 | 0.2 | 500 | |
| | 0.5 | 0.2 | 500 | No delayed fracture |
| | 0.7 | 0.2 | 500 | |
| | 0.9 | 0.2 | 500 | |
| | 1.1 | 0.2 | 500 | |
| Burr side | 1.3 | 0.2 | 500 | |

**[Table 13]**

| V-bending tightening R7 burr-inside tightening | | | | |
|---|---|---|---|---|
| OK upper limit | | | | |
| | Position in sheet thickness/mm | Working equivalent plastic strain amount | Load stress | Delayed fracture occurrence position |
| Sheared surface side | 0.1 | 0.13 | -602 | |
| | 0.3 | 0.1 | -717 | |
| | 0.5 | 0.07 | 1027 | No delayed fracture |
| | 0.7 | 0.04 | 1458 | |
| | 0.9 | 0.01 | 1253 | |
| | 1.1 | 0.02 | 1157 | |
| Burr side | 1.3 | 0.06 | 1049 | |

**[Table 14]**

| V-bending tightening R7 burr-outside tightening | | | | |
|---|---|---|---|---|
| OK upper limit | | | | |
| | Position in sheet thickness/mm | Working equivalent plastic strain amount | Load stress | Delayed fracture occurrence position |
| Sheared surface side | 0.1 | 0.06 | -602 | |
| | 0.3 | 0.02 | -717 | |
| | 0.5 | 0.01 | 1027 | No delayed fracture |
| | 0.7 | 0.04 | 1458 | |
| | 0.9 | 0.07 | 1253 | |
| | 1.1 | 0.1 | 1157 | |
| Burr side | 1.3 | 0.13 | 1049 | |

Next, for the test piece at a level at which the delayed fracture did not occur, the range on the low stress side relative to the boundary of the region containing the position in the sheet thickness, the strain amount by the working, and the plot of the load stress (evaluation data) was determined as the safe region where the delayed fracture does not occur. FIG. 7 illustrates the first limit curve. In the first limit curve, the boundary surface is set based on the magnitude of the value of the load stress (first principal stress).

In FIG. 7, when the plastic strain is 0, the limit stress is the smallest near the center at the coordinates in the sheet thickness of 0.7 mm. Next, the end of the burr side at the coordinates in the sheet thickness of 1.3 mm is in a middle level. The end of the sheared surface at the coordinates in the sheet thickness of 0.1 mm is the largest. In this case, the limit stress in a place having high residual stress in the residual stress distribution in FIG. 4C is low. The limit stress increases due to the entrance of the plastic strain. However, when the plastic strain is "0.20", which is excessively large, it is found from the curve that the limit stress decreases due to damage to a material. The limit stress refers to the maximum load stress at which the delayed fracture does not occur.

Next, Tables 15 to 18 show some of the test pieces at the level at which the delayed fracture occurred. Table 15 shows the results of the test pieces that were in the sheared state without being subjected to working in (1) above. Table 16 shows the results of the test pieces into which strain was introduced by minor axis tension in (2) above. Table 17 shows the results of the test pieces into which strain was introduced by minor axis compression in (3) above. Table 18 shows the results of the test pieces into which strain was introduced by V-bending (bending with the burr side as the outside of the bending) in (4) above.

**[Table 15]**

| Four-point bending (with burr side as outside) | | | | |
|---|---|---|---|---|
| NG lower limit | | | | |
| | Position in sheet thickness/mm | Working true strain amount | Load stress | Delayed fracture occurrence position |
| Sheared surface side | 0.1 | 0 | -1100 | - |
| | 0.3 | 0 | -733 | - |
| | 0.5 | 0 | -367 | - |
| | 0.7 | 0 | 0 | - |
| | 0.9 | 0 | 367 | - |
| | 1.1 | 0 | 733 | Delayed fracture occurrence starting point |
| Burr side | 1.3 | 0 | 1100 | 0 |

**[Table 16]**

| Four-point bending (with burr side as outside) | | | | |
|---|---|---|---|---|
| NG lower limit | | | | |
| | Position in sheet thickness/mm | Working true strain amount | Load stress | Delayed fracture occurrence position |
| Sheared surface side | 0.1 | 0.02 | -1500 | - |
| | 0.3 | 0.02 | -1000 | - |
| | 0.5 | 0.02 | -500 | - |
| | 0.7 | 0.02 | 0 | - |
| | 0.9 | 0.02 | 500 | - |
| | 1.1 | 0.02 | 1000 | |
| Burr side | 1.3 | 0.02 | 1500 | Delayed fracture occurrence starting point |

**[Table 17]**

| NG lower limit | | | | |
|---|---|---|---|---|
| | Position in sheet thickness/mm | Working true strain amount | Load stress | Delayed fracture occurrence position |
| Sheared surface side | 0.1 | 0.2 | -700 | - |
| | 0.3 | 0.2 | -467 | - |
| | 0.5 | 0.2 | -233 | - |
| | 0.7 | 0.2 | 0 | - |
| | 0.9 | 0.2 | 233 | - |
| | 1.1 | 0.2 | 467 | - |
| Burr side | 1.3 | 0.2 | 700 | Delayed fracture occurrence starting point |

**[Table 18]**

| NG lower limit | | | | |
|---|---|---|---|---|
| | Position in sheet thickness/mm | Working equivalent strain amount | Load stress | Delayed fracture occurrence position |
| Sheared surface side | 0.1 | 0.13 | -700 | - |
| | 0.3 | 0.1 | -664 | - |
| | 0.5 | 0.07 | 1016 | - |
| | 0.7 | 0.04 | 1535 | Delayed fracture occurrence starting point |
| | 0.9 | 0.001 | 1431 | - |
| | 1.1 | 0.02 | 1246 | - |
| Burr side | 1.3 | 0.06 | 1182 | - |

Including the test pieces in Tables 15 to 18, the position where the delayed fracture occurred was three-dimensionally developed with the position in the sheet thickness on the X-axis, the strain amount by the working on the Y-axis, and the stress on the Z-axis. As a result, all the positions went beyond the safe region (first limit curve) where the delayed fracture does not occur, and it was confirmed that the positions are positions having a high risk of the delayed fracture. It is found that the delayed fracture can be evaluated and predicted with higher accuracy by evaluating the working strain and the load stress for each integration point and determining the delayed fracture as described above. Herein, the first limit curve is determined by the method in FIG. 7. It is also possible to determine the limit curve of the danger region referring to the plots (evaluation data) of Tables 15 to 18 in an auxiliary manner.

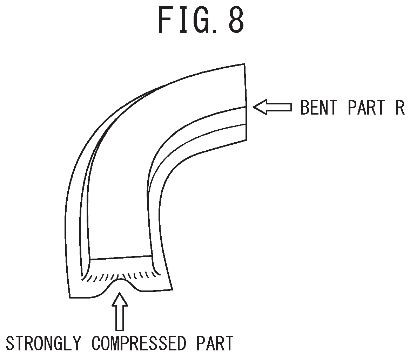

Next, the delayed fracture of the sheared end surface in a press-formed article was determined. Therefore, a press-formed article (metal component) having a sheared end surface of a shape illustrated in FIG. 8 was considered. Thereafter, forming simulation by CAE was implemented for the press-formed article. Then, for elements of a part corresponding to the sheared end surface, the strain amount and the stress by the working were calculated for each evaluation position in the sheet thickness direction. Herein, the strain amount and the stress by the working were cucullated for each integration point in the sheet thickness direction using the shell elements. This correlated the position in the sheet thickness with the strain amount and the stress by the working.

The evaluation position in the sheet thickness direction was plotted on the X-axis, the strain amount by the working was plotted on the Y-axis, and the load stress was plotted on the Z-axis, and a comparison with the region of the limit curve described above was performed. Then, it has been found that, among the places illustrated in FIG. 8, a combination of "Position in sheet thickness and strain amount and stress by working in strongly compressed part" belongs to the danger region as shown in Tables 19, 20. Then, the area was determined to be a delayed fracture dangerous area.

**[Table 19]**

| Strongly compressed part | Position in sheet thickness/mm | Forming plastic strain amount | Load stress | Delayed fracture risk determination | Delayed fracture test result |
|---|---|---|---|---|---|
| Sheared surface side | 0.1 | 0.17 | 1112 | NG (Beyond limit curve) | |
| | 0.3 | 0.17 | 1049 | NG (Beyond limit curve) | |
| | 0.5 | 0.18 | 922 | NG (Beyond limit curve) | |
| | 0.7 | 0.18 | 895 | NG (Beyond limit curve) | Occurrence of delayed fracture |
| | 0.9 | 0.18 | 821 | NG (Beyond limit curve) | |
| | 1.1 | 0.19 | 822 | NG (Beyond limit curve) | |
| Burr side | 1.3 | 0.19 | 817 | NG (Beyond limit curve) | |

**[Table 20]**

| Bent part | Position in sheet thickness/mm | Forming plastic strain amount | Load stress | Delayed fracture risk determination | Delayed fracture test result |
|---|---|---|---|---|---|
| Sheared surface side | 0.1 | 0.21 | 72 | OK (Within limit curve) | |
| | 0.3 | 0.17 | 184 | OK (Within limit curve) | |
| | 0.5 | 0.12 | 447 | OK (Within limit curve) | |
| | 0.7 | 0.06 | 815 | OK (Within limit curve) | No delayed fracture |
| | 0.9 | 0.05 | 147 | OK (Within limit curve) | |
| | 1.1 | 0.11 | 18 | OK (Within limit curve) | |
| Burr side | 1.3 | 0.15 | 47 | OK (Within limit curve) | |

On the other hand, for a bending-worked part, no position in the sheet thickness goes beyond the first limit curve. Therefore, the part was determined not to be the delayed fracture dangerous area.

When a delayed fracture test was actually implemented, the delayed fracture occurred at the position of the strongly compressed part that was determined to be the dangerous are.

Thus, a blank shape was changed, and a press-formed article was prepared in which the stress in the strongly compressed part was reduced as shown in Table 21. This press-formed article has no sheared end surface belonging to the danger region of the delayed fracture. Therefore, the risk of the delayed fracture of the press-formed article was determined to be low. To confirm this, the delayed fracture test was actually implemented. As a result, the delayed fracture did not occur, and a press-formed article excellent in delayed fracture characteristics was able to be manufactured.

**[Table 21]**

| Strongly compressed part (Measures against stress were taken.) | Position in sheet thickness/mm | Working equivalent plastic strain amount | Load stress | Delayed fracture risk determination | Delayed fracture test result |
|---|---|---|---|---|---|
| Sheared surface side | 0.1 | 0.17 | 290 | OK (Within limit curve) | |
| | 0.3 | 0.17 | 312 | OK (Within limit curve) | |
| | 0.5 | 0.18 | 344 | OK (Within limit curve) | |
| | 0.7 | 0.18 | 388 | OK (Within limit curve) | No delayed fracture |
| | 0.9 | 0.18 | 434 | OK (Within limit curve) | |
| | 1.1 | 0.19 | 442 | OK (Within limit curve) | |
| Burr side | 1.3 | 0.19 | 448 | OK (Within limit curve) | |

Herein, the entire contents of JP 2023-155594 A (filed September 21, 2023), for which this application claims priority, form part of the present disclosure by reference. Herein, the description is given with reference to a limited number of embodiments, but the scope of the invention is not limited thereto and modifications of each embodiment based on the disclosure above are obvious to those skilled in the art.

### Reference Signs List

10: test piece production step
11: test piece adjustment step
12: stress load application step
13: hydrogen entry load test step
14: forming analysis step
15: evaluation criterion creation step
15A: first step
15B: second step
41: forming simulation step
42: prediction step
50: component adjustment
60: storage portion
60A: evaluation criterion information
70: program
71: CAE processing portion
72: evaluation portion

## Claims

1. A method for evaluating delayed fracture for evaluating delayed fracture characteristics of a sheared end surface of a metal sheet, the method comprising:
testing whether the delayed fracture occurs with respect to application of forming strain and load stress to the sheared end surface of the metal sheet;
for each of two or more evaluation positions along a sheet thickness direction of the sheared end surface, determining evaluation information on whether the delayed fracture occurs with respect to the forming strain and the load stress at the evaluation position based on the test; and
determining, from the determined evaluation information, evaluation criteria for the delayed fracture evaluation with the evaluation position, the forming strain, and the load stress as variables.

2. The method for evaluating delayed fracture according to claim 1, comprising:
in the test,
preparing a plurality of metal sheets in which a sheared end surface is formed,
introducing plastic strain into the sheared end surface of the plurality of metal sheets by one or two or more strain introduction methods selected from among two or more types of strain introduction methods different in distribution of strain generated in the sheet thickness direction,
loading stress by one stress loading method selected from among two or more types of stress loading methods different in distribution of stress generated in the sheet thickness direction,
carrying out the test of determining whether the delayed fracture occurs to each metal sheet in a state where the stress has been loaded, and
setting a total of plastic strain generated by the plastic strain introduction and plastic strain generated by the loading of the stress as the forming strain.

3. The method for evaluating delayed fracture according to claim 1 or 2, wherein
the test is carried out by placing the metal sheet in a hydrogen intrusion environment in a state where the forming strain and the stress load have been applied to the sheared end surface, and
the forming strain and the load stress in the sheared end surface at the evaluation position are determined by forming analysis using a computer.

4. The method for evaluating delayed fracture according to claim 3, wherein
the forming analysis is performed by a finite element method using a shell element, and
a coordinate in the sheet thickness direction of the sheared end surface corresponding to the evaluation position is determined by a position of an integration point in the sheet thickness direction of the shell element.

5. The method for evaluating delayed fracture according to any one of claims 1 to 4, comprising:
determining the evaluation information of the forming strain and the load stress at the evaluation position where the delayed fracture has not occurred, and determining a safe region where the delayed fracture does not occur as the evaluation criterion from the determined evaluation information.

6. The method for evaluating delayed fracture according to claim 5, comprising:
as the evaluation criterion, determining a first limit curve defining an upper limit of the safe region with the coordinates, the forming strain, and the load stress in the sheet thickness direction of the sheared end surface as variables.

7. The method for evaluating delayed fracture according to any one of claims 1 to 6, comprising:
determining the evaluation information of the forming strain and the load stress at the evaluation position where the delayed fracture has occurred, and determining a danger region having a possibility that the delayed fracture occurs as the evaluation criterion from the evaluation information.

8. The method for evaluating delayed fracture according to claim 7, comprising:
specifying the evaluation position where the delayed fracture has occurred by observing a place where the delayed fracture has occurred in the sheet thickness direction of the sheared end surface in the test.

9. The method for evaluating delayed fracture according to claim 7 or 8, comprising:
determining a second limit curve defining a lower limit of the danger region with the coordinates, the forming strain, and the load stress in the sheet thickness direction of the sheared end surface as variables as the evaluation criterion.

10. A method for predicting delayed fracture for predicting delay occurrence in a sheared end surface in a metal component to be manufactured by press-working a metal sheet having the sheared end surface comprising:
based on the evaluation criteria determined by the method for evaluating delayed fracture according to any one of claims 1 to 9, predicting the occurrence of the delayed fracture.

11. The method for predicting delayed fracture according to claim 10, comprising:
individually calculating the forming strains and the load stresses at two or more evaluation positions along a sheet thickness direction of the sheared end surface of the metal component generated by the press processing into the metal component of the metal sheet by analyzing the press processing by forming analysis using a computer, and
predicting the delayed fracture from results of the calculation and the evaluation criteria.

12. The method for predicting delayed fracture according to claim 11, wherein
the forming analysis is performed by a finite element method using a shell element, and
a coordinate in the sheet thickness direction of the sheared end surface corresponding to the evaluation position is determined by a position of the integration point in the sheet thickness direction of the shell element.

13. The method for predicting delayed fracture according to claim 11 or 12, comprising:
determining the evaluation information of the forming strain and the load stress at the evaluation position where the delayed fracture has not occurred in the test as the evaluation criteria, and setting a safe region where the delayed fracture does not occur from the determined evaluation information in advance,
individually calculating the forming strains and the load stresses at two or more evaluation positions of the sheared end surface of the metal component by analyzing the press processing into the metal component of the metal sheet by forming analysis using a computer, and determining that there is a risk of the delayed fracture when results of the calculation go beyond the safe region.

14. The method for predicting delayed fracture according to any one of claims 11 to 13, comprising:
determining the evaluation information of the forming strain and the load stress at the evaluation position where the delayed fracture has occurred in the test as the evaluation criteria, and setting a danger region having a possibility that the delayed fracture occurs from the determined evaluation information in advance,
individually calculating the forming strains and the load stresses at two or more evaluation positions of the sheared end surface of the metal component by analyzing the working into the metal component of the metal sheet by forming analysis using a computer, and determining that there is a risk of the delayed fracture when results of the calculation are within the danger region.

15. The method for predicting delayed fracture according to any one of claims 11 to 13, comprising:
determining the evaluation information of the forming strain and the load stress at the evaluation position where the delayed fracture has not occurred in the test as the evaluation criteria, and setting a safe region where the delayed fracture does not occur from the determined evaluation information in advance, and determining the evaluation information of the forming strain and the load stress at the evaluation position where the delayed fracture has occurred in the test, and setting a danger region having a possibility that the delayed fracture occurs from the determined evaluation information in advance,
individually calculating the forming strains and the load stresses at two or more evaluation positions of the sheared end surface of the metal component by analyzing the working into the metal component of the metal sheet by forming analysis using a computer, and determining that there is a risk of the delayed fracture when results of the calculation go beyond the safe region and further determining that a risk of the delayed fracture is high when the results of the calculation are within the danger region.

16. A method for manufacturing a press-formed article for manufacturing a press-formed article as a metal component by press-forming a metal sheet having a sheared end surface comprising:
before the press-formed article is manufactured, predicting the occurrence of the delayed fracture by the method for predicting delayed fracture according to any one of claims 10 to 15.

17. A program causing a computer to execute processing of evaluating whether delayed fracture occurs referring to information of the evaluation criteria for the delayed fracture evaluation with the evaluation position, the forming strain, and the load stress determined based on the method for evaluating delayed fracture according to any one of claims 1 to 9 as variables for input evaluation position, forming strain, and load stress,
the information of the evaluation criteria being stored in a storage portion.
